# EUROPÄISCHE PATENTSCHRIFT

(11) **EP 0 739 293 B1**
(45) Veröffentlichungstag und Bekanntmachung des Hinweises auf die Patenterteilung: **11.02.1998**
(21) Anmeldenummer: 95939263.0
(22) Anmeldetag: 13.11.1995
(51) Int. Cl.: B65D 27/06, B65D 27/04

(54) **MEHRWEG-VERSANDTASCHE**
REUSABLE MAILING POCKET
POCHETTE D'EXPEDITION REUTILISABLE

(30) Priorität: 14.11.1994 DE 4440654
(43) Veröffentlichungstag der Anmeldung: 30.10.1996
(73) Patentinhaber: Lindenbeck, Heinrich, 81735 München (DE)
(72) Erfinder: Lindenbeck, Heinrich, 81735 München (DE)
(74) Vertreter: Behrmann, Niels, Dipl.-Ing.
(86) Internationale Anmeldenummer: EP9504441
(87) Internationale Veröffentlichungsnummer: WO9615038

(56) Entgegenhaltungen:
- DE-U- 9 016 450
- FR-A- 1 596 517
- US-A- 4 288 028

## Beschreibung

Die vorliegende Erfindung betrifft eine Mehrweg-Versandtasche nach dem Oberbegriff des Patentanspruchs 1. Eine solche Vorrichtung ist aus dem deutschen Gebrauchsmuster 90 16 450.4 bekannt.

Aus diesem Stand der Technik, wie auch aus anderen Hinweisen, ist die Problematik bekannt, zur Vermeidung von Müll, insbesondere Briefumschläge od. dgl. Versandtaschen wiederverwertbar auszugestalten und sie zu diesem Zweck dauerhaft aus Kunststoff herzustellen.

Allerdings orientiert sich diese gattungsgemäße Mehrweg-Versandtasche -- abgesehen vom verwendeten Material -- noch stark an herkömmlichen Umschlägen bzw. Briefhüllen aus Papier oder Pappe, so daß das Verschließen durch den Benutzer und somit die Handhabung insgesamt mühsam und damit unbefriedigend bleibt: Insbesondere sieht nämlich eine solche bekannte Versandtasche vor, daß -- wie beim hinlänglich bekannten, klassischen Briefumschlag -- die rückwärtig vorgesehene Verschlußlasche durch einen (mehrfach verwendbaren) Kleber oder ein Klebeband mit dem übrigen Umschlag verklebt wird. Dann ist eine handelsübliche Briefmarke auf der Frontseite aufzukleben, die, wenn die Versandtasche wiederverwendet werden soll, erst mühsam entfernt werden muß.

Schließlich ist die Herstellung einer solchen bekannten Versandtasche mühsam und aufwendig, da zähes und vergleichsweise dickes Plastikmaterial in der Art eines herkömmlichen Briefumschlags zugeschnitten, aufeinandergefaltet und nahtweise dauerhaft miteinander verbunden werden muß. Hinzu kommt das Problem, in der Frontseite der gattungsgemäßen Versandtasche ein Adreßfenster auszubilden.

Aus dem deutschen Gebrauchsmuster 91 08 653.1 ist ferner eine wiederverwendbare Versandtasche bekannt, bei der mindestens eine der Wände durchgehend aus transparentem Material gebildet ist. Hierdurch würde zwar die Adressierung erleichtert; für den normalen Gebrauch im Postverkehr ist eine solche Versandtasche jedoch allein schon deswegen nicht geeignet, weil der Inhalt der Versandtasche -- über die Adresse hinaus -- von außen erkennbar ist.

Schließlich ist aus der DE 37 44 621 A1 nicht nur eine aus einer Plastikfolie bestehende Mehrweg-Versandtasche bekannt, die eine transparente Vorderseite aufweist, sondern die Vorderseite besitzt zusätzlich im Bereich der Anordnung von Briefmarken oder Freistempeln einen Ausschnitt zum Zugriff auf einen unterliegenden Briefbogen (der dann unmittelbar mit der Frankierung zu versehen wäre). Abgesehen davon, daß auch in diesem Fall ggf. vertrauliche Informationen von außen her sichtbar wären, stellt die teilweise Öffnung der Tasche im Bereich der Frankierung eine Maßnahme dar, die insbesondere in feuchter Umgebung das zu transportierende Versandgut beeinträchtigen könnte und somit für eine universelle Verwendung ungeeignet ist.

Aufgabe der vorliegenden Erfindung ist es daher, eine Mehrweg-Versandtasche nach dem Oberbegriff des Patentanspruchs 1 zu schaffen, die in Handhabung und Herstellung vereinfacht ist, und die zusätzlich für beliebige Versandanwendungen flexibel geeignet ist, ohne daß ihr Inhalt -- über eine Adreßangabe hinaus -- von außen erkennbar wäre.

Die Aufgabe wird durch die Mehrweg-Versandtasche mit den Merkmalen des Patentanspruchs 1 gelöst.

So bildet die erfindungsgemäße Mehrweg-Versandtasche zwischen der transparenten Schicht und der rückseitigen Wand ein Einschubfach für das Versandgut, und frontseitig ist die Versandtasche durch einfaches Einführen bzw. Einstecken der Verschlußlasche in das zwischen der transparenten Schicht und der frontseitigen Wand gebildete, zur Lasche hin offene Fach verschließbar, ohne daß weitere Klebestreifen oder -flächen notwendig wären.

Da ferner die frontseitige Wand ohnehin mittels der Verbindung im Bereich des Adreßfensters mit der transparenten Schicht verbunden ist, wird so auf einfache Weise das Einsteckfach für die Verschlußlasche ausgebildet, ohne daß es zusätzlicher, größeren Herstellungsaufwand verursachender Verbindungsstellen bedarf.

Zudem hat es sich in der Herstellung als besonders vorteilhaft erwiesen, wenn im Inneren der Versandtasche die das Adreßfenster bedeckende transparente Schicht nicht nur in diesem Bereich vorgesehen ist, sondern sich als durchgehende Lage zwischen den jeweiligen Kanten der Versandtasche erstreckt. Insbesondere ist nämlich das für die transparente Schicht verwendete Material so gewählt, daß dieses beim Verschweißen der Lagen besser bzw. schneller schmilzt als das Kunststoffmaterial der frontseitigen bzw. rückseitigen Wand, so daß in den Verbindungsbereichen die transparente Schicht als Kleber wirkt.

Vorteilhafte Weiterbildungen der Erfindung sind in den Unteransprüchen beschrieben.

So ist besonders vorteilhaft die rückseitige Wand mit der daran ansetzenden Verschlußlasche einstückig aus dem Kunststoffmaterial gebildet, wobei bevorzugt die frontseitige Wand, die transparente Schicht sowie die rückseitige Wand an drei umlaufenden Rändern miteinander verschweißt sind. Durch diese Maßnahmen läßt sich die erfindungsgemäße Versandtasche in der Serienfertigung einfach und mit wenig Aufwand aus Kunststoff-Bahnmaterial herstellen.

Besonders bevorzugt erstreckt sich ferner die transparente Schicht im Inneren der Tasche über im wesentlichen die gesamte Höhe der Versandtasche, während die frontseitige Wand in ihrer Höhe (bezogen auf die Öffnung) verkürzt ist. Hierdurch wird einerseits das Verschließen vereinfacht, da die Verschlußlasche ein kürzeres Stück zwischen frontseitiger Wand und transparenter Schicht eingeführt werden muß, andererseits bleibt aber das Versandgut durch die hochgezogene transparente Schicht optimal geschützt, auch wenn die Verschlußlasche noch nicht geschlossen ist.

Zur Verbesserung bzw. Vereinfachung des Einführens von Versandgut ist die der Öffnung zugewandte Kante der transparenten Schicht mit einem leicht V-förmigen Einschnitt versehen, der zusätzlich randseitig Ausstanzungen aufweisen kann, die -- beim mehrfachen Gebrauch -- ein Ein- bzw. Ausreißen der transparenten Schicht verhindern.

Vorteilhaft ist ferner die Verbindung zwischen frontseitiger Wand und transparenter Schicht mittels einer um das Adreßfenster umlaufenden Schweißnaht hergestellt. Zum einen begrenzt diese Schweißnaht so eine maximale Einstecktiefe der Verschlußlasche zwischen frontseitiger Wand und transparenter Schicht, und zum anderen bildet ein Vertikalabschnitt dieser umlaufenden Schweißnaht eine seitliche Grenze eines zusätzlichen Einschubfachs, das -- vor dem eigentlichen Transportfach liegend und von diesem durch die transparente Schicht getrennt -- die zum Transport einer Diskette od. dgl. Datenträger geeignete Form aufweist. Für den Fall, daß die erfindungsgemäße Mehrweg-Versandtasche --entsprechend verwendetem Versandgut -- eine größere Höhe aufweist, ist es vorteilhaft, eine dieses zusätzliche Einschubfach bodenseitig begrenzende Schweißnaht einzuziehen.

Ein weiterer Vorteil der um das Adreßfenster umlaufenden Schweißnaht liegt darin, daß durch den oberen Nahtabschnitt verhindert wird, daß bei Kontakt der erfindungsgemäßen Versandtasche mit anderen Briefen, Postkarten od. dgl. --z. B. in einem Briefkasten oder einer Posttasche -- solche dünnen Sendungen unbeabsichtigt entlang der eingesteckten Verschlußlasche in das Innere der Versandtasche hineingleiten können.

Besonders vorteilhaft wird die erfindungsgemäße Mehrweg-Versandtasche zusätzlich mittels eines Haftsiegels verschlossen, das geeignet auf die Frontseite aufgebracht wird und, bei eingesteckter Verschlußlasche, diese mit der frontseitigen Wand verbindet. Durch die günstige Anordnung im oberen Frontbereich dient dieses Haftsiegel nicht nur als Verschlußmittel, sondern ist zusätzlich zum Anbringen von Briefmarken, anderen Frankiervermerken od. dgl. Aufdrucken angeordnet -- weiteren aufzuklebenden Elementen, wie zusätzlichen Briefmarken od. dgl., bedarf es dann nicht mehr.

Insbesondere bei einer Verwendung mit geheimhaltungsbedürftigen Dokumenten hat es sich als vorteilhaft erwiesen, das Verschlußsiegel mit einem spröden, unelastischen Überzug zu versehen, der Öffnungsversuche durch Rißbildung od. dgl. erkennen läßt.

Ebenfalls von der Erfindung mitumfaßt ist eine alternative Ausbildung des Verschlusses der Mehrweg-Versandtasche als Faltverschluß, für die im Zusammenhang mit der obigen Erfindung oder aber unabhängig Schutz beansprucht wird: Danach kann die Verschlußlasche zum Verschließen über die Öffnung in ein zur Unterseite hin offenes (d. h. der Öffnung entgegengesetzt vorgesehenes) Einsteckfach eingeschoben werden, das besonders geeignet durch Umfalten und seitliches Befestigen eines Ausschnittes aus der frontseitigen Wand (alternativ: der transparenten Schicht) hergestellt worden ist und eine Trapez- bzw. Schwalbenschwanzform mit Schmalseite im Bereich der Faltkante aufweist.

Auch eine solche -- alternative -- Verschlußform eignet sich zum Gebrauch mit dem erfindungsgemäßen Haftsiegel, wobei dieser Aspekt der Erfindung auch ohne Adreßfenster bzw. transparenter Schicht, oder aber auf der Rückseite einer Versandtasche umsetzbar wäre.

Weitere Vorteile, Merkmale und Einzelheiten der Erfindung ergeben sich aus der nachfolgenden Beschreibung von Ausführungsbeispielen anhand der Zeichnung. Diese zeigt in:
- Fig. 1: eine Frontansicht der erfindungsgemäßen Mehrweg-Versandtasche gemäß einer ersten Ausführungsform mit aufgeklappter Verschlußlasche;
- Fig. 2:: eine Schnittansicht der Versandtasche entlang der Schnittlinie II - II in Fig.1;
- Fig. 3:: eine Schnittansicht der Versandtasche gemäß Fig. 1 entlang der Schnittlinie III - III;
- Fig. 4:: eine Frontansicht der Mehrweg-Versandtasche mit geschlossener Verschlußlasche und appliziertem Verschlußsiegel;
- Fig. 5:: eine Schnittansicht der Versandtasche gemäß Fig. 4 entlang der Schnittlinie V - V;
- Fig. 6:: eine Prinzipdarstellung eines alternativen Verschlusses einer Mehrweg-Versandtasche gemäß einer weiteren Ausführungsform;
- Fig. 7:: eine Prinzipdarstellung mit einer Weiterentwicklung der Ausführungsform gemäß Fig. 6;
und
- Fig. 8:: eine schematische Schnittansicht der Versandtasche gemäß Fig. 7.

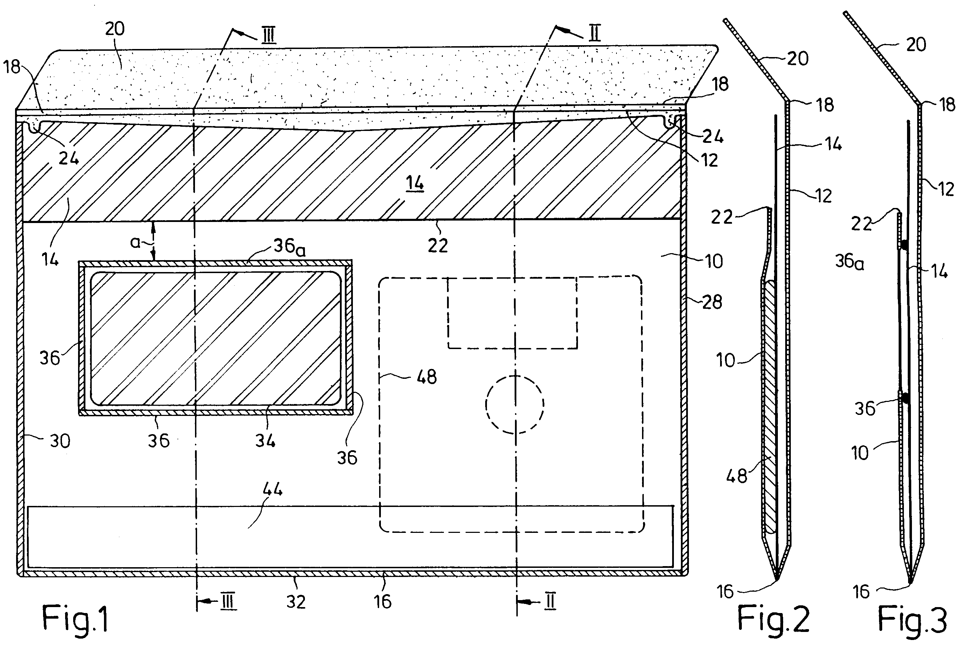

Eine Mehrweg-Versandtasche einer ersten, bevorzugten Ausführungsform zum Aufnehmen von Versandgut etwa im Format A5 ist -- wie in den Fig. 1 bis 5 gezeigt -- im wesentlichen dreilagig aus einer Frontfläche (Vorderwand) 10, einer Rückfläche (Rückwand) 12 sowie einer transparenten Zwischenlage 14 aufgebaut. Dabei ist die Frontfläche 10 über eine Bodenfalte 16 entweder einstückig mit der Rückfläche 12 gebildet, welche sich wiederum über eine Biegefalte 18 in einer Verschlußlasche 20 fortsetzt, so daß eine an ihrer Breitseite zugängliche und verschließbare, im Umfang rechteckige Hülle entsteht, oder aber die Versandtasche ist aus diskreten Stücken als Front- und Rückfläche zusammengesetzt.

Die auf die vorstehend beschriebene Weise ausgebildeten Elemente 10,12,20 sind durch eine im wesentlichen lichtundurchlässige, wasser- und feuchtigkeitsbeständige Kunststoffolie -- bevorzugt Polypropylen (PP) --realisiert, wobei bahnförmiges, eine strukturierte Oberfläche aufweisendes Material in entsprechender Weise abgelängt und gefaltet wurde. Wie sich insbesondere aus den Seitenansichten gemäß Fig. 2 und 3 ergibt, endet die Frontfläche 10 mit einer Oberkante 22 unterhalb der Biegefalte 18 und erstreckt sich dadurch nicht über die gesamte Höhe der Rückfläche 12.

Die zwischen der Frontfläche 10 und der Rückfläche 12 vorgesehene Zwischenlage 14 -- die mit einer Klarsicht-Folienschicht, bevorzugt aus transparentem Polypropylen (PP), realisiert ist -- erstreckt sich hingegen durchgehend einlagig von der Bodenfalte 16 bis hinauf zur Biegefalte 18. Wie zudem die aufgeklappte Vorderansicht gemäß Fig. 1 erkennen läßt, ist die Zwischenlage 14 im Bereich ihrer der Biegefalte 18 zugewandten Oberkante leicht V-förmig zum mittleren Bereich der Oberkante hin ausgeschnitten. Zudem weist die Zwischenlage 14 im oberen Bereich seitliche, halbkreisförmige Ausstanzungen 24 auf. Durch diese Maßnahmen wird das Verschließen der Versandtasche verbessert (V-Form) bzw. ein Aus- oder Einreißen des oberen Bereichs der Zwischenlage 14 bei häufigem Gebrauch verhindert (Ausstanzungen 24,26).

Die Frontfläche 10, die Zwischenlage 14 und die Rückfläche 12 sind auf beiden Seiten randseitig mittels seitlicher Verschweißungen 28,30 unlösbar und luft- bzw. feuchtigkeitsgeschützt verbunden. Zusätzlich verbindet eine bodenseitige Verschweißung 32 im Bereich der Bodenfalte 16 die die Frontfläche 10 bzw. die Rückfläche 12 bildende PP-Schicht mit der Klarsicht-Zwischenlage 14. Für den Fall, daß die Frontfläche 10 bzw. die Rückfläche 12 einstückig aus durchgehendem Bahnmaterial hergestellt sind, ist die bodenseitige Verschweißung 32 entbehrlich.

Das PP-Material der Klarsicht-Zwischenlage 14 weist Schmelzeigenschaften auf, die ein Schmelzen bei einer Temperatur bewirken, welche unterhalb der Schmelztemperatur des Kunststoffmaterials für die übrigen Wände liegt. Dies führt zu der für eine Herstellung vorteilhaften Wirkung, daß die (bei dreilagiger Verarbeitung) zwischen Frontlage und Rücklage liegende Klarsicht-Zwischenlage als Klebstoff wirkt, der an den Verschweißungsstellen eine dauerhafte Verbindung der Schichten herstellt.

Die Frontfläche 10 weist einen im wesentlichen rechteckigen Ausschnitt bzw. Durchbruch 34 auf, der -- angepaßt an Normen für die Anordnung des Adreßfeldes auf einem Geschäftsbrief -- angeordnet ist und die unterliegende Klarsicht-Zwischenlage 14 freilegt. Umfangsseitig ist die Frontfläche 10 im Bereich des Ausschnittes 34 mit der Zwischenlage 14 durch eine umlaufende Schweißnaht 36 verbunden, wobei die obere Naht 36ₐ der umlaufenden Naht 36 zur Oberkante 22 der Frontfläche 10 einen Abstand a von etwa 5 bis 20 mm, bevorzugt 12 mm, einhält.

Die Höhe der Verschlußlasche 20 ist so bemessen, daß sie sich im geschlossenen (d.h. im zwischen die Frontfläche 10 und die Zwischenlage 14 eingesteckten) Zustand über die Oberkante 22 hinaus bis etwa zur oberen Naht 36ₐ erstreckt. Auf diese Weise kann die Verschlußlasche 20 -- die, zur Vereinfachung des Einführens zwischen Frontfläche 10 und Zwischenlage 14, umgekehrt V-förmig, d. h. mit einer leichten, in der Figur nicht gezeigten Spitze versehen ist -- auf einfache Weise verschlossen werden und durch Klemmwirkung zwischen dem oberen Bereich der Frontfläche 10 (bis hinab zur Naht 36ₐ) sowie der Zwischenlage 14 gehalten werden.

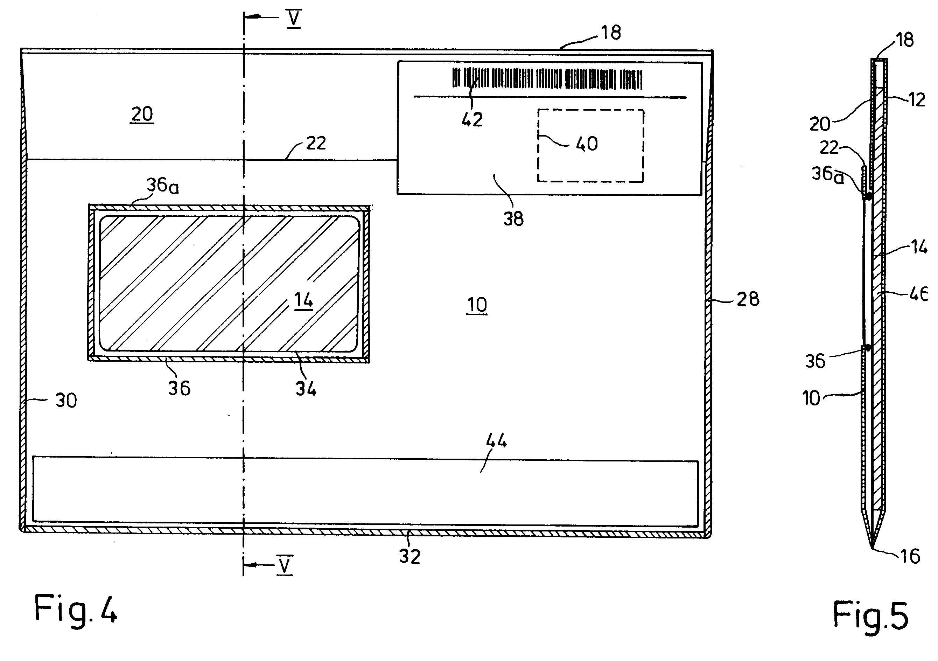

Zum zusätzlichen Verschließen ist das in der Fig. 4 gezeigte Verschlußsiegel 38 vorgesehen, das bei eingesteckter Verschlußlasche 20 seitlich des Ausschnitts 34 sowohl einen Bereich der Verschlußlasche 20 als auch einen oberen Abschnitt der Frontfläche 10 bedeckend aufklebbar ist. Das Verschlußsiegel 38 dient dann -- in der beschriebenen Weise plaziert -- nicht nur zum ergänzenden Verschließen bzw. Versiegeln der Versandtasche, sondern bietet zusätzlich Platz für (in der Fig. 4 mit dem Bezugszeichen 40 schematisch angedeutete) Briefmarken oder Frankiervermerke, sowie zusätzlich Platz für Kennzeichnungen (Barcode 42) od. dgl.Beschriftungen.

Zum Aufkleben in der beschriebenen Weise ist das Verschlußsiegel auf einer Unterseite mit einer Klebeschicht versehen, die -- abgestimmt auf die strukturierte Ober- bzw. Außenfläche der Frontfläche 10 und der Lasche 20 -- i. w. rückstandsfrei abziehbar ist.

Frontseitig im unteren Bereich der Frontfläche 10 ist bei dem beschriebenen Ausführungsbeispiel zusätzlich eine Beschriftungs- bzw. Etikettierfläche 44 vorgesehen, die zur Erleichterung der Beschriftung bzw. des Aufbringens von Werbeträgern od. dgl. bevorzugt eine glatte Oberfläche aufweist.

Das beschriebene Ausführungsbeispiel mit Kantenlängen von 238 mm (Breite) bzw. 166 mm (Höhe) im verschlossenen Zustand ist zum Aufnehmen von Versandgut 46 im Querformat DIN A5 bemessen, wobei in diesem Fall die Unterkante des Adreßfensters 34 einen Abstand von etwa 60 mm zur Bodenfalte 16 aufweist.

Wie in der Schnittansicht gemäß Fig. 5 gezeigt, wird das Versandgut 46 in den Innenraum zwischen Rückfläche 12 und Zwischenlage 14 eingeführt. Dadurch bleibt eine -- entsprechend auf dem Versandgut angebrachte -- Anschrift frontseitig durch das Adreßfenster 34 hindurch von außen lesbar.

Zusätzlich wird neben dem Adreßfenster 34 eine Innentasche bzw. ein Innenfach zwischen der Frontfläche 10 und der Zwischenlage 14 gebildet, die seitlich von der rechtseitigen Verschweißung 28 bzw. der umlaufenden Schweißnaht 36 des Adreßfensters 34 begrenzt wird und bodenseitig von der Verschweißung 32 abgeschlossen ist. Im dargestellten Ausführungsbeispiel erhält so diese zusätzliche Innentasche eine Breite von etwa 115 mm sowie eine Höhe (bis zur Oberkante 22) von etwa 130 mm, die zur Aufnahme einer handelsüblichen 3,5" Diskette 48 od. dgl. Datenträger -- in der Schnittansicht gemäß Fig. 2 gezeigt -- optimal bemessen ist.

Wie sich für den Fachmann unmittelbar aus dem vorstehend beschriebenen Aufbau der erfindungsgemäßen Versandtasche ergibt, ist diese in der Herstellung äußerst einfach: Lediglich drei randseitige Verschweißungen 28,30,32 der Frontfläche 10, der Rückfläche 12 sowie der Zwischenlage 14 sowie eine umlaufende Verschweißung 36 im Bereich des Ausschnittes 34 für das Adreßfenster sind zwischen Frontfläche 10 und Zwischenlage 14 vorzunehmen.

Zum Gebrauch faltet der Benutzer, nachdem er Versandgut 46 und/oder eine zusätzliche Diskette 48 von oben in die Versandtasche eingeführt hat, die Verschlußlasche 20 um und führt sie mit ihrer freien Kante in den zwischen der Oberkante 22 der Frontfläche 10 sowie der Zwischenlage 14 gebildeten Schlitz. Danach wird die Versandtasche durch Aufbringen des Verschlußsiegels -- das gegebenenfalls bereits mit einem Frankiervermerk oder weiteren Aufdrucken versehen worden ist -- versiegelt und ist zum Versenden bereit.

Beim Empfänger ist die erfindungsgemäße Mehrweg-Versandtasche dann durch einfaches Ablösen des Verschlußsiegels, beispielsweise durch Einführen des Daumens zwischen Frontfläche und Zwischenlage im Bereich der Oberkante 22 seitlich des Verschlußsiegels, und durch nachfolgendes Herausziehen der Verschlußlasche 20 wieder zu öffnen. Ein einfaches Wiederverschließen und somit die Wieder- bzw. Mehrfachbenutzung der erfindungsgemäßen Versandtasche ist dann lediglich durch Aufbringen eines neuen Verschlußsiegels 20 möglich.

Gemäß einer bevorzugten Weiterbildung ist das Verschlußsiegel 20 mit Mitteln versehen, die ein spurloses Abziehen und Wiederverschließen unmöglich machen: So könnte das Siegel 20 geeignet angebrachte Bruchstellen aufweisen, die ein zerstörungsfreies Abziehen des Verschlußsiegels verhindern. Allternativ oder zusätzlich könnte das Verschlußsiegel 20 mit einem Überzug, z. B. einem geeigneten Lack, versehen sein, der brüchig bzw. spröde ist und Risse zeigt, wenn das Siegel einer stärkeren Rundung bzw. Biegung (wie sie beim Abziehen entstehen würde) ausgesetzt ist. Ein zu diesem Zweck geeigneter Lack ist z. B. ein transparenter Kunstharzlack, der durch zusätzlichen Härter spröde und unelastisch gemacht wurde. Auch Epoxydharz- oder Polyesterüberzüge mit vergleichbaren Eigenschaften sind geeignet.

Beispielsweise zur Versendung von Drucksachen ist allerdings die erfindungsgemäße Versandtasche ohne Verschlußsiegel benutzbar; die Tasche ist dennoch zuverlässig und transportsicher verschließbar, kann jedoch leicht zur Prüfung geöffnet werden:

Zur Verwendung mit einer automatischen Frankiermaschine ist das Verschlußsiegel aus Papier oder einem papierähnlichen Material hergestellt, rückseitig mit einem geeigneten Kleber versehen und so bemessen, daß die Frankiermaschine den (Frei-) Stempelabdruck an der vorgegebenen Position aufbringen kann.

Es wäre eine mögliche Weiterentwicklung dahingehend denkbar, daß -- in der Art von Briefmarken -- Verschlußsiegel entsprechend freigemacht bereits als Block od. dgl. erhältlich sind und lediglich aufgeklebt werden müssen, um die Tasche zum Versand freizumachen.

Während die vorstehend beschriebene Ausführungsform insbesondere zur Verwendung mit Versandgut vom Format DIN A5 geeignet ist, ist eine Übertragung der erfindungsgemäßen Lösung problemlos auf andere Abmessungen bzw. Formate möglich:

So würde sich ein geringfügig breiter bzw. höher bemessener Umschlag ideal zum Versand von CD-ROMs (zwischen Frontfläche 10 und Zwischenlage 14) zusammen mit geeignetem schriftlichem Begleitmaterial eignen. Eine Verdopplung des Innenraums auf Dokumentenformate A4 ist durch entsprechendes bodenseitiges Verlängern der Versandtasche gemäß der oben beschriebenen Ausführungsform möglich (allerdings wäre es hier vorteilhaft, eine Zwischennaht auf der Höhe der vorstehend für das Format A5 beschriebenen Bodenfalte 16 einzuziehen, die dann sowohl bodenseitig das Einschubfach für Diskettengröße begrenzen würde, als auch zur zusätzlichen Versteifung bzw. Festigkeitserhöhung der Versandtasche im A4-Hochformat dienen würde.

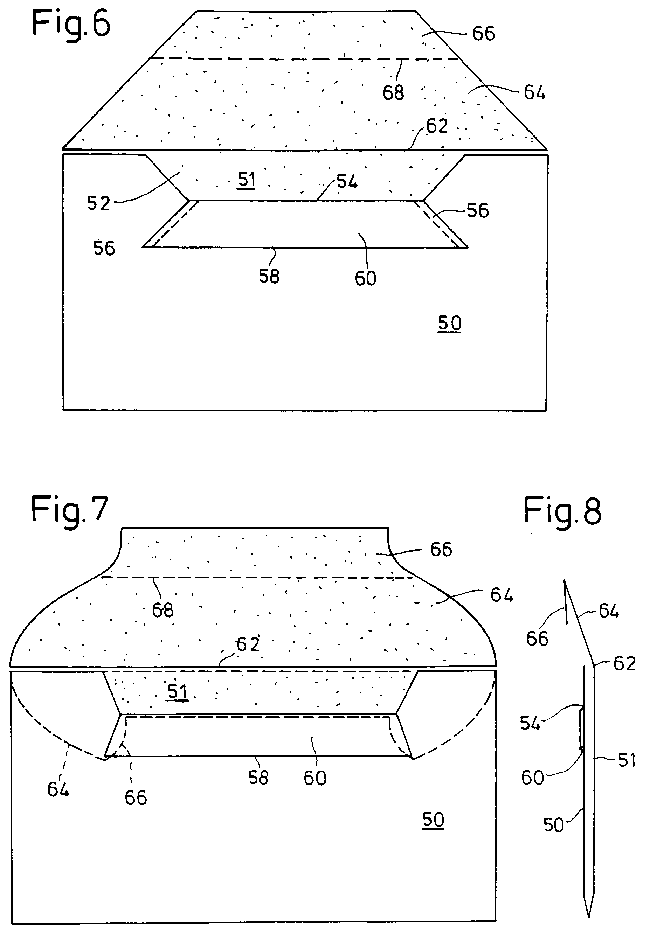

Eine Weiterbildung der oben beschriebenen Ausführungsformen im Hinblick auf eine alternative Ausgestaltung des Verschlusses wird nachfolgend unter Bezug auf die Fig. 6 bis 8 beschrieben.

Die Prinzipansicht gemäß Fig. 6 zeigt eine Versandtasche im Querformat -- beispielsweise entsprechend der vorstehend beschriebenen Ausführungsformen, oder aber auch zur Verwendung mit beliebigen anderen Versandtaschen.

Eine Frontfläche 50 weist einen trapez- bzw. schwalbenschwanzförmigen Ausschnitt 52 auf, wobei das trapezförmig aus dem Ausschnitt 52 herausgetrennte Flächenelement um eine Achse 54 geklappt und mittels seitlicher Schweißnähte 56 auf der Frontfläche 50 festgelegt ist. Auf diese Weise entsteht ein im Bereich der Kante 58 offenes Einsteckfach 60.

Eine Decklasche 64 setzt über eine Biegefalte 62 die unter der Frontfläche 50 liegende Rückfläche 51 fort und mündet endseitig in einen Laschenabschnitt 66, der über eine Knickachse 68 auf die in der Fig. 6 sichtbare Fläche der Decklasche 64 zurückgefaltet ist.

Die gestrichelten Linien der Fig. 7, womit insoweit die Versandtasche gemäß Fig. 6 mit abgerundeten Konturen der Decklasche weitergebildet wird, verdeutlichen, wie das Verschließen funktioniert: Der gefaltete Laschenabschnitt 66 hintergreift bei auf der Frontfläche 50 aufliegender Decklasche 64 das Einsteckfach 60 und wird darin eingeklemmt, so daß ein einfaches und dennoch sicheres Verschließen ermöglicht wird.
Die Seitenansicht gemäß Fig. 8 ist eine schematische Schnittansicht durch die Mitte der Versandtasche gemäß Fig. 6 oder Fig. 7 und verdeutlicht noch einmal die strukturelle Beziehung der Elemente zueinander.

Die notwendige Geometrie der Decklasche 64, des Laschenabschnitts 66, des Ausschnitts 52 bzw. des Einsteckfaches 60 bzw. die Abmessungen dieser Elemente ergeben sich unmittelbar aus deren beabsichtigtem Zusammenwirken. Insbesondere ist es vorteilhaft, wenn die Breite der Decklasche 64 zwischen Biegefalte 62 und Knickachse 68 gleich dem Abstand zwischen Biegefalte 62 und Kante 58 (bzw. Öffnung des Einsteckfaches 60) ist, so daß im geschlossenen Zustand der Laschenabschnitt 66 vollständig in das Einsteckfach 60 hineingreift.

Bei einer Verwendung des im Zusammenhang mit den Fig. 6 bis 8 beschriebenen Verschlußmechanismus mit der Versandtasche gemäß der anhand der Fig. 1 bis 5 beschriebenen Ausführungsformen wäre dann lediglich darauf zu achten, daß die --durch entsprechende Normen feststehende -- Position des Adreßfensters 34 nicht verändert werden muß. Der in den Fig. 6 bis 8 beschriebene Verschluß könnte dann in entsprechender Weise mit einem Verschlußsiegel -- bevorzugt im Bereich der rechten oberen Ecke -- versehen werden.

Sämtliche vorstehend beschriebenen Ausführungsformen der Versandtasche werden mittels einer PP-Kunststoffolie realisiert, die für die eigentliche, aus Vorder- und Rückseite bestehende Außenhülle lichtundurchlässig -- bevorzugt schwarz -- eingefärbt ist und eine äußere Oberflächenstruktur besitzt, die im wesentlichen unregelmäßig ist und an die Oberfläche von Leder erinnert; beliebige andere Oberflächenstrukturen jedoch, die geeignet die Handhabbarkeit der Versandtasche verbessern, sind möglich und vom Erfindungsgedanken mitumfaßt. Insbesondere liegt es im Ermessen des Fachmanns, die erfindungsgemäße Versandtasche nicht lediglich aus (jeweils einlagigen) Kunststoffbahnen aufzubauen, sondern mehrlagige, versteifte und/oder geeignet hinterfütterte Materialien auszuwählen, die für einen jeweiligen Verpackungs- und Versandzweck geeignet sind.

Ferner ist es dann im Belieben des Herstellers, die erfindungsgemäße Versandtasche an geeigneten Stellen mit weiteren Flächen in der Art der Beschriftungsfläche 44 zu versehen, die sich in besonders einfacher Weise für das Aufbringen von Werbeaufdrucken, Beschriftungen od. dgl. eignen.

## Patentansprüche

1. Mehrweg-Versandtasche, die eine frontseitige (10) und eine rückseitige (12) Wand aus im wesentlichen lichtundurchlässigem Kunststoff sowie eine Öffnung zum Einführen von Versandgut aufweist, wobei die frontseitige Wand (10) einen als Adreßfenster (34) ausgebildeten Ausschnitt aufweist, der innenseitig mittels einer transparenten Schicht (14) überdeckt ist,
dadurch gekennzeichnet,
daß die transparente Schicht (14) sich auf der Innenseite der Tasche über mindestens die Innenfläche der frontseitigen Wand (10) erstreckt und im Bereich des Adreßfensters (34) unlösbar mit der frontseitigen Wand (10) verbunden ist, und eine an der rückseitigen Wand (12) ansetzende Verschlußlasche (20) zum Verschließen der Öffnung einführ- und einsteckbar zwischen die frontseitige Wand (10) und die transparente Schicht (14) ausgebildet ist.

2. Mehrweg-Versandtasche nach Anspruch 1, dadurch gekennzeichnet, daß die rückseitige (12) Wand sowie die Verschlußlasche (20) einstückig ausgebildet sind und die Versandtasche aus drei kontinuierlichen Bahnen, die der frontseitigen Wand (10), der transparenten Schicht (14) und der rückseitgen Wand (12) entsprechen und randseitig verschweißt sind, hergestellt ist.

3. Mehrweg-Versandtasche nach Anspruch 1 oder 2, dadurch gekennzeichnet, daß die transparente Schicht (14) sich im Inneren der Tasche über im wesentlichen die gesamte Fläche der rückseitigen Wand (12) erstreckt und die rückseitige Wand die frontseitigen Wand (10) überragt.

4. Mehrweg-Versandtasche nach Anspruch 3, dadurch gekennzeichnet, daß die der Öffnung zugewandte Kante der transparenten Schicht einen stumpfwinkeligen, V-förmigen Ausschnitt aufweist.

5. Mehrweg-Versandtasche nach einem der Ansprüche 1 bis 4, dadurch gekennzeichnet, daß die transparente Schicht (14) mit der frontseitigen Wand (10) mittels einer um das Adreßfenster (34) umlaufenden Schweißnaht (36) verbunden ist, die einen das Einführen bzw. Einstecken der Verschlußlasche (20) bodenseitig begrenzenden oberen Nahtabschnitt (36ₐ) sowie einen ein zusätzliches Einschubfach zwischen der transparenten Schicht (14) und der frontseitigen Wand (10) seitlich des Adreßfensters (34) begrenzenden Nahtabschnitt (36) aufweist.

6. Mehrweg-Versandtasche nach Anspruch 5, dadurch gekennzeichnet, daß das zusätzliche Einschubfach bodenseitig durch eine mindestens die frontseitige Wand (10) mit der transparenten Schicht (14) unlösbar verbindende, im wesentlichen parallel zur Öffnung verlaufende Schweißnaht begrenzt und so in Höhe und Breite bemessen ist, daß es zur Aufnahme einer Diskette, einer CD-ROM od. dgl. geeignet ist.

7. Mehrweg-Versandtasche nach einem der Ansprüche 1 bis 6, gekennzeichnet durch ein Haftsiegel (38), daß im eingesteckten Zustand der Verschlußlasche (20) einen außenliegenden Bereich sowohl der Verschlußlasche (20) als auch der frontseitigen Wand (10) bedeckend und lösbar auf der Versandtache festlegbar ausgebildet ist.

8. Mehrweg-Versandtasche nach Anspruch 7, dadurch gekennzeichnet, daß das Haftsiegel (38) auf der der Versandtasche zugewandten Seite selbstklebend ausgebildet ist und frontseitig eine zum dauerhaften Aufbringen eines Aufdrucks oder eines Stempelabdrucks geeignete Oberfläche aufweist.

9. Mehrweg-Versandtasche nach Anspruch 7 oder 8, dadurch gekennzeichnet, daß das Haftsiegel (38) mit einem unelastischen Überzug versehen ist, der bei einem Biegen oder Ablösen des Haftsiegels (38) dauerhafte, sichtbare Risse bekommt.

10. Mehrweg-Versandtasche nach Anspruch 9, dadurch gekennzeichnet, daß der Überzug ein im wesentlichen transparenter Lack auf Kunstharzbasis ist.

## Claims

1. A multiple-use shipping bag comprising a front wall (10) and a rear wall (12) of substantially opaque plastics material, and an opening for the introduction of material to be dispatched, wherein said front wall (10) has a cut-out which is in the form of an address window (34) and which is covered on the inside by means of a transparent layer (14), characterized in that said transparent layer (14) extends along the inside of the wrapper over at least the inside surface of the front wall (10) and is non-releasably connected to the front wall (10) in the region of the address window (34), and wherein a closure flap (20) adjoining said rear wall (12), for closing said opening, is provided in such a way that it can be introduced and inserted between said front wall (10) and said transparent layer (14).

2. The multiple-use shipping bag according to claim 1, wherein said rear wall (12) and the closure flap (20) are integrally formed and said dispatch bag is made from three continuos webs which correspond to the front wall (10), the transparent layer (14), and the rear wall (12), and which are welded at the edges.

3. The multiple-use shipping bag according to claim 1 or 2, wherein said transparent layer (14) extends in the interior of the bag over substantially the entire surface of the rear wall (12) and wherein the rear wall rises above the front wall (10).

4. The multiple-use shipping bag according to claim 3, wherein the edge of said transparent layer, which is towards the opening, has an obtuse-angled, V-shaped cut-out.

5. The multiple-use shipping bag according to one of claims 1 to 4, wherein said transparent layer (14) is joined to said front wall (10) by means of a welded seam (36) which extends around said address window (34) and which has an upper seam portion (36ₐ) delimiting introduction or insertion of said closure flap (20) at a bottom side, with a seam portion (36) defining an additional insertion compartment between said transparent layer (14) and said front wall (10) laterally of the address window (34).

6. The multiple-use shipping bag according to claim 5, wherein said additional insertion compartment is defined at a bottom side thereof by a welded seam which non-releasably connects at least said front wall (10) to said transparent layer (14) and which extends substantially parallel to said opening, and wherein said additional insertion compartment is of such a height and width that it is suitable for accommodating a diskette, a CD-ROM or the like.

7. The multiple-use shipping bag according to one of claim 1 to 6 comprising an adhesive seal (38) which in the inserted condition of said closure flap (20) is designed to cover an outwardly disposed region both of the closure flap (20) and also the front wall (10), and which is adapted to be releasably fixed on said shipping bag.

8. The multiple-use shipping bag according to claim 7, wherein said adhesive seal (38) is of a self-adhesive nature on the side towards the shipping bag, and having on its front a surface which is suitable for permanent application of printing or a stamp imprint.

9. The multiple-use shipping bag according to claim 7 or 8, wherein said adhesive seal (38) is provided with a non-elastic coating which has permanent visible cracks upon bending or detachment of the adhesive seal (38).

10. The multiple-use shipping bag according to claim 9, wherein said covering is a substantially transparent, synthetic resin-based lacquer.

## Revendications

1. Pochette d'expédition réutilisable, présentant une paroi du côté frontal (10) et une paroi du côté arrière (12) en un matériau sensiblement non transparent, ainsi qu'une ouverture pour introduire le ou les article(s) à expédier, la paroi du côté frontal (10) comprenant une partie réalisée sous la forme d'une fenêtre d'adresse (34)et qui est recouverte du côté intérieur d'une couche transparente (14), caractérisée en ce que la couche transparente (14) s'étend sur la face intérieure de la pochette sur au moins la surface intérieure de la paroi du côté frontal (10) et est reliée dans la zone de la fenêtre d'adrese (34) de façon non séparable à la paroi du côté frontal (10), tandis qu'un rabat d'obturation (20) s'appliquant sur la face du côté arrière (12) est réalisée en étant susceptible d'être inséré et enfiché entre la face du côté frontal (10) et la couche transparente (14) pour obturer l'ouverture.

2. Pochette d'expédition réutilisable selon la revendication 1, caractérisée en ce que la paroi du côté arrière (12) ainsi que la rabat d'obturation (20) sont réalisés monobloc et en ce que la pochette d'expédition est fabriquée à partir de trois bandes continues, qui correspondent respectivement à la face du côté avant (10), à la couche transparente (14) et à la face du côté arrière (12), et sont soudées sur les bords.

3. Pochette d'expédition réutilisable selon la revendication 1 ou 2 , caractérisée en ce que la couche transparente (14) s'étend à l'intérieur de la pochette sensiblement sur toute la surface de la paroi du côté arrière (12) et en ce que la paroi du côté arrière dépasse au-delà de la paroi du côté avant (10).

4. Pochette d'expédition réutilisable selon la revendication 3, caractérisée en ce que l'arête de la couche transparente tournée vers l'ouverture, présente une découpe en forme de V et à angle obtus.

5. Pochette d'expédition réutilisable selon l'une des revendications de 1 à 4, caractérisée en ce que la couche transpparente (14) est reliée à la paroi du côté frontal (10) à l'aide d'un cordon de soudure (36) qui entoure la fenêtre d'adresse (34) et qui comporte une partie supérieure de cordon (36a) délimitant du côté du fond l'insertion ou l'enfichage du rabat d'obturation (20), ainsi qu'une partie de cordon (36) délimitant une case supplémentaire d'insertion entre la couche transparente (14) et la paroi du côté frontal (10), latéralement par rapport à la fenêtre d'adresse (34).

6. Pochette d'expédition réutilisable selon la revendication 5, caractérisée en ce que la case supplémentaire d'insertion est délimitée, du côté du fond, par un cordon de soudure courant de façon sensiblement paralléle à l'ouverture et reliant de façon non séparable au moins la paroi du côté frontal (10) à la couche transparente (14), cette case présentant des dimensions en hauteur et en largeur telles que la case soit appropriée pour recevoir une disquette, un CD-ROM ou similaire.

7. Pochette d'expédition réutilisable selon l'une des revendications 1 à 6, caractérisée par un cachet adhérent (38), qui est réalisé, à l'état appliqué du rabat d'obturation (20), en recouvrant une zone extérieure, aussi bien du rabat d'obturation (20) qu'également de la paroi du côté frontal (10), et qui est susceptible d'être appliqué de façon amovible sur la pochette d'expédition.

8. Pochette d'expédition réutilisable selon la revendication 7, caractérisée en ce que le cachet adhérent (38) est réalisé auto-collant sur la face tournée vers la pochette d'expédition, et comporte, sur sa face frontale, une surface appropriée pour l'application durable d'une impression ou d'une oblitération par tampon.

9. Pochette d'expédition réutilisable selon la revendication 7 ou 8 caractérisée en ce que le cachet adhérent (38) est muni d'un revêtement non élastique qui, en cas de flexion ou d'enlévement du cachet adhérent (38), présente des rayures visibles et durables.

10. Pochette d'expédition réutilisable selon la revendication 9, caractérisée en ce que le revêtement est une laque sensiblement transparente et à base de résine synthétique.
